## Europäisches Patentamt
## European Patent Office
## Office européen des brevets

(11) Publication number: **0 010 630**
**B1**

(12) **EUROPEAN PATENT SPECIFICATION**

(45) Date of publication of patent specification: **26.05.82**

(51) Int. Cl.³: **A 01 C 1/06, A 01 N 25/00**

(21) Application number: **79103748.4**

(22) Date of filing: **02.10.79**

(54) Coating of plant seeds.

(30) Priority: **05.10.78 US 948663**

(43) Date of publication of application:
**14.05.80 Bulletin 80/10**

(45) Publication of the grant of the patent:
**26.05.82 Bulletin 82/21**

(84) Designated Contracting States:
**AT BE CH DE FR GB IT NL SE**

(56) References cited:
**AT - B - 271 089**
**CH - A - 552 343**
**GB - A - 1 479 848**
**US - A - 3 803 761**

(73) Proprietor: **SAREA A.G.**
**Zugerstrasse 8**
**CH-6330 Cham (CH)**

(72) Inventor: **Wieser, Franz**
**Khevenhüllerstrasse 33**
**A-4020 Linz (AT)**
Inventor: **Rückl, Georg**
**Küffelstrasse 20**
**A-4020 Linz (AT)**
Inventor: **Hofinger, Hans-Peter**
**Linzerstrasse 157B**
**A-4600 Wels (AT)**

(74) Representative: **Ledzion, Andrzej**
**55, avenue Nestlé**
**CH-1800 Vevey (CH)**

Courier Press, Leamington Spa, England.

# 0 010 630

## Coating of plant seeds

This invention is concerned with the coating of plant seeds.

To meet the specific needs, various coatings have been applied to seeds. For example, seeds have been "pelletized" to make them more uniform in size, thereby facilitating handling and mechanical sowing. Pelleting is especially useful for small seeds and seeds of irregular shape. Alternatively, coatings have been applied to seeds as a means of protection against cold and disease.

Thus, for example, U.S.—A—No. 3803761 describes a method of protecting seeds from the rigours of winter in which a coating is applied consisting of a non-elastomeric material. The preferred material is an inter-polymer of vinylidene chloride, vinyl chloride and optionally a minor amount of a lower alkyl acrylate and the coating should have (a) a thickness of 0.01 to 0.15 mm, (b) a water vapour transmission rate of 0.03 to 5 grams per 100 sq. inches (645 cm$^2$) of 1 mil film/24 hours, (c) an elongation to break of less than 200 percent, and it should permit normal oxygen transmission for respiration of the seed whilst controlling access of moisture to delay germination. As described in U.K. Patent Specification No. 1479848, seed coatings may also contain binders, fungicides, insecticides, nutrients and bird repellents.

To the coatings may also be adhered alkaline substances, especially to those applied to seeds preferring neutral soils but which are to be sown in acid soils. Coatings retarding gemination have also been applied to seeds of plant varieties normally flowering and maturing over different time intervals so that coated and uncoated seeds may be planted simultaneously. Both the varieties will then flower at the same time. This technique is useful in the production of hybrid seed corn.

Whilst the application of a coating is a relatively simple procedure, it must nevertheless meet certain criteria in order to be a viable operation capable of being carried out economically on a large scale. The applied coating should be even and have sufficient mechanical resistance to remain intact on handling in order to assure maximum protection for the seed. Methods of applying coatings should desirably be capable of treating in a short processing time large quantities of seed, up to 10 tonnes per hour, without any significant losses. The coating itself should be stable on storage and unaffected by temperature changes.

It has now been found that certain binders more fully described hereafter are especially suitable for use in seed coatings that do not inhibit germination and contain fungicides with other optional ingredients.

In accordance with this invention, there is provided a process for treating plant seeds by forming on the surface of the seeds a firmly adhering, moisture-permeable, essentially water-insoluble coating, which process comprises applying to the seeds an essentially non-aqueous coating solution of the following composition:

| | |
|---|---|
| binder | 3.5 to 22.5% by weight |
| binder solvent | 67.0 to 87.0% by weight |
| fungicide | 7.0 to 22.5% by weight |
| insecticide | 0 to 26.0% by weight |
| minor additives | 0 to 3.0% by weight |

wherein (i) the binder is a natural or synthetic resin or a natural or synthetic wax, and (ii) the respective weight ratios of solvent to binder and solvent to total solids in the solution are 3.5 to 20:1 and 1.8 to 4.2:1, and thereafter eliminating the solvent.

It will be observed that the binder is essentially insoluble in water which, inter alia, makes the seed much less sensitive to exposure to moisture on storage and after sowing is not washed off the seed by rain, so that the active ingredients remain with the seed for a longer time. The coating however is moisture-permeable so that the seed germinates normally. Examples of preferred binders include shellac, polystyrene, polyethylene glycol or coffee wax (usually obtained by solvent extraction of green coffee). Mixtures of binders may also be used, as for example shellac with coffee wax or polyethylene glycol. The amount of binder present in the coating solution will normally vary according to its nature. Thus, natural substances taken together, may be present in amounts of up to about 25% by weight, whereas synthetic resins will usually not exceed about 10% of the weight of the coating solution. The term "solution" is used for convenience, denoting that the binder is dissolved in the solvent. However, ingredients may be present, notably one or more fungicides, which do not dissolve in the solvent, so therefore technically the "coating solution" may in fact also be a suspension.

The solvent (which term for convenience also designates solvent mixtures) will be selected having regard to the binder used, and will normally be a lower alkanol or ketone or a halogenated hydrocarbon. To facilitate their elimination, solvents having relatively low boiling points are preferred. Needless to

2

say, the solvent should not be phytotoxic.

Different fungicides may be incorporated in the coating, and as these substances are well known *per se* no detailed discussion of their properties is necessary. As noted above, the fungicide need not necessarily be soluble in the binder solvent. One or more fungicides may be incorporated, and their total weight may represent up to 22.5% of the composition.

One or more insecticides may also be present, as well as other additives such as pigments, growth stimulants, minor nutrients fertilizers, bird repellents.

The coating solution is most conveniently applied to the seeds by spraying whilst the seeds are in motion, conveniently in a tumbler, rotating drum or similar piece of equipment. Thereafter, the solvent is eliminated for example by application of a vacuum or passing warm air through the coated seeds. The vaporised solvent will usually be condensed for re-use. The relative proportions of coating solution to seed will depend, inter alia, on its concentration of active ingredients, the desired thickness of the coating and also on the site of the seed. In general, the coating solution to seed ratio will be 1 to 4:100 by weight. For example, 100 kg of maize seed may be treated with about 1.5 kg of coating solution containing about 20% fungicide. Satisfactory binder to seed ratio are 1 to 2:1000.

Coatings in accordance with the invention may be applied to a wide variety of seeds, and may, likewise, contain a wide range of active ingredients. Particularly successful results have been obtained with seeds of maize, various vegetables and legumes including soja beans, peas, beans, cucumber, radish; melon; sunflower; and also cereals including rye and wheat.

As compared with previously-known seed treatment techniques, the present invention provides significant and unexpected advantages. Using the organic binders described herein, plant protection agents may be applied in very thin coatings which are attached firmly to the seeds. Such coatings, which may have a thickness of 0.02 to 0.2 mm, are very resistant to removal by mechanical forces and by virtue of their thinness may be used for applying fungicides and other agents to large seeds with a negligible increase in their size. The thin coating of this invention covers the entire surface of a seed, even hollows, such as the area around the germ of maize, assuring a high degree of protection.

As the coating solution has a low viscosity, and small amounts are applied, the treatment is extremely rapid, so that a high hourly output may be obtained from small installations. Moreover, as the plant protection agents and other additives are applied in a liquid medium, usually in solution, losses through dusting off are non-existent.

Another advantage, deriving from the use of organic solvents, is rapid drying of the coated seeds. Air at 20—40°C suffices to dry the seeds in 20 seconds or so and as no water is present there is no danger of causing undesirable swelling of the seeds during treatment.

It has also been observed that application of the coating has a beneficial effect on infected or physically damaged maize seed, as is shown by comparison of the germination, plant weight and resistance to fungal attack of treated and untreated infected seed:

TABLE I

| Var. | treated | | | untreated | | |
|------|---------|---|---|-----------|---|---|
| | germination glasshouse | plant weight | ° inf. | germination glasshouse | plant weight | ° inf. |
| A | 97.3%** | 35.3*** | 15.6*** | 84.8% | 23.8 | 72.8 |
| B | 94.0* | 69.8* | 31.1* | 82.3 | 60.6 | 92.6 |
| C | 66.7* | 55.3 | 22.9* | 46.0 | 49.6 | 73.5 |
| D | 99.3 | 42.5 | 1.8* | 98.3 | 30.9 | 38.0 |

° inf. = fungal infection as percentage of infected germinated seeds (visual inspection).

The invention is illustrated by the following Examples, in which all ratios, parts and percentages are given on a weight basis. The significance levels of the statistical data are designated by the symbols:

* = 95%
** = 99%
*** = 99.9%

# 0 010 630

### Example 1

A coating solution having the following composition:

| | |
|---|---|
| fungicide | 21.0% |
| shellac | 10.0% |
| ethanol | 13.2% |
| acetone | 55.5% |
| colouring | 0.3% |

is applied to maize seed in a ratio of 1:66 parts by sprying whilst the seed is tumbling in a rotating drum. Thereafter the solvent is evaporated in a current of warm (about 30°C) air. In the solution described above, the acetone functions as a boiling-point depressant, to facilitate solvent elimination. It may be replaced by methylene chloride.

Field trial results obtained with the coated seed are summarised in table II.

### TABLE II

| Location | % field emergence | |
|---|---|---|
| | treated | untreated |
| Lower Austria (Continental Climate) | 84.8** | 77.3 |
| Western Germany (Stuttgart area) | 77.8** | 61.4 |

### Example 2

Maize seed is coated with a solution having the following composition:

| | |
|---|---|
| fungicide | 20.0% |
| coffee wax | 6.7% |
| shellac | 3.3% |
| ethanol | 13.3% |
| methylene chloride | 56.7% |
| colouring | 0.6% |

Coating is effected by spraying the solution on the seed in a rotating drum and is completed within 45 to 60 seconds. The seed is then transferred to a drier where it is exposed for 120 seconds to air at 30°C. The seed is removed from the drier and packed; the binder/seed ratio is 1:660.

The positive effects of the treatment were demonstrated by laboratory tests for germination and root fresh weight. These are given in Table III below:

### TABLE III

| | % germination | root weight (in grams) |
|---|---|---|
| treated | 93.3 | 5.95 |
| untreated | 66.0 | 3.45 |

### Example 3

Various seeds are coated at a solution/seed ratio of 1:15 with a solution having the following composition:

4

| | |
|---|---|
| fungicide | 14.3% |
| shellac | 17.1% |
| ethanol | 67.9% |
| colouring | 0.7% |

The procedure of Example 2 was followed.
Results of greenhouse germination trials are reported in Table IV.

TABLE IV

| | % germination | |
|---|---|---|
| | Treated | Untreated |
| Peas, "Rheinperle" | 97.8* | 92.2 |
| Peas, "Perfektion" | 92.7*** | 62.8 |
| Beans, "Sabo" | 97.2** | 87.8 |
| Sunflower | 95.0* | 87.8 |
| Rye | 90.0 | 83.9 |
| Radish | 87.0 | 85.5 |
| Cucumber | 97.5 | 94.5 |

Example 4

Maize seeds are coated, at a solution/seed ratio of 1:22, with a solution having the following composition:

| | |
|---|---|
| fungicides | 6.7% |
| insecticide[+] | 22.5% |
| methylene chloride | 67.2% |
| polystyrene | 3.4% |
| colouring | 0.2% |

+ includes bird repellent

The procedure of Example 2 was followed. Results of laboratory tests for germination and fresh weight of shoot are reported in Table V.

TABLE V

| | % germination | shoot weight (grams) |
|---|---|---|
| Treated | 90.0* | 0.11* |
| Untreated | 81.0 | 0.09 |

The test results reported in Tables I to V also clearly demonstrate that the coating applied to the seeds does not retard germination, so that it is not suitable for use as a protective agent against frost. In this latter case, the requirement is for a coating to delay germination so that seeds sown in very cold climates do not emerge prematurely only to be destroyed by frost.

## Claims

1. A process for treating plant seeds by forming on the surface of the seeds a firmly adhering, moisture-permeable, essentially water-insoluble coating characterised in that the process comprises applying to the seeds an essentially non-aqueous coating solution comprising:

| | |
|---|---|
| binder | 3.5 to 22.5% by weight |
| binder solvent | 67.0 to 87.0% „ |
| fungicide | 7.0 to 22.5% „ |
| insecticide | 0 to 26.0% „ |
| minor additives | 0 to 3.0% „ |

wherein: (i) the binder is a natural or synthetic resin or a natural or synthetic wax, and (ii) the respective weight ratios of solvent to binder and solvent to total solids in the solution are 3.5 to 20:1 and 1.8 to 4.2:1, and thereafter eliminating the solvent.

2. A process according to claim 1 in which the binder is shellac and the solvent to binder ratio is 3.5 to 6.9:1.

3. A process according to claim 2 in which the solvent comprises ethanol.

4. A process according to claim 3 in which the solvent is a mixture of ethanol with acetone or methylene chloride.

5. A process according to claim 1 in which the binder is coffee wax or polystyrene, and the solvent includes a halogenated hydrocarbon.

6. A process according to claim 5 in which the binder is a mixture of coffee wax and shellac.

7. A process according to any preceding claim, in which 1 to 5 parts by weight of solution are applied to every 100 parts by weight of seed.

## Revendications

1. Procédé de traitement de semences par formation, à la surface des semences, d'un revêtement perméable à l'humidité, essentiellement insoluble dans l'eau, adhérant fortement, caractérisé en ce qu'il consiste à appliquer aux semences une solution de revêtement essentiellement non aqueuse comprenant:

| | |
|---|---|
| liant | 3,5 à 22,5% en poids |
| solvant pour le liant | 67,0 à 87,0% en poids |
| fongicide | 7,0 à 22,5% en poids |
| insecticide | 0 à 26,0% en poids |
| additifs secondaires | 0 à 3,0% en poids |

dans laquelle: (i) le liant est une résine naturelle ou synthétique ou une cire naturelle ou synthétique et (ii) les rapports en poids respectifs du solvant au liant et du solvant aux matières solides totales dans la solution ont des valeurs de 3,5 à 20:1 et 1,8 à 4,2:1, puis à éliminer le solvant.

2. Procédé suivant la revendication 1, caractérisé en ce que le liant est la shellac et le rapport du solvant au liant est de 3,5 à 6,9:1.

3. Procédé suivant la revendication 2, dans lequel le solvant contient de l'éthanol.

4. Procédé suivant la revendication 3, dans lequel le solvant est un mélange d'éthanol avec de l'acétone ou du chlorure de méthylène.

5. Procédé suivant la revendication 1, dans lequel le liant est de la cire de café ou du polystyrène et le solvant renferme un hydrocarbure halogéné.

6. Procédé suivant la revendication 5, dans lequel le liant est un mélange de cire de café et de shellac.

7. Procédé suivant l'une quelconque des revendications précédentes, dans lequel 1 à 5 parties en poids de solution sont appliquées par 100 parties en poids de semences.

## Patentansprüche

1. Verfahren zur Behandlung von Saatgut, durch Ausbilden eines fest haftenden, feuchtigkeitsdurchlässigen, im wesentlichen wasserunlöslichen Uberzuges auf der Oberfläche des Saatgutes, dadurch gekennzeichnet, daß das Verfahren das Aufbringen auf das Saatgut einer im wesentlichen nicht wässerigen Überzugslösung umfaßt, enthaltend

3,5—22,5 Gew.-% Bindemittel

67,0—87,0 Gew.-% Lösungsmittel für das Bindemittel

7,8—22,5 Gew.-% Fungizid

0 —26,0 Gew.-% Insektizid

0 — 3,0 Gew.-% geringfügige Additive,

wobei (i) das Bindemittel ein natürliches oder synthetisches Harz oder ein natürliches oder synthetisches Wachs ist und (ii) die Gewichtsverhältnisse von Lösungsmittel zu Bindemittel bzw. Lösungsmittel zu Gesamtfeststoffen in der Lösung 3,5 bis 20:1 bzw. 1,8 bis 4,2:1 betragen, wonach das Lösungsmittel eliminiert wird.

2. Verfahren nach Anspruch 1, dadurch gekennzeichnet, daß das Bindemittel Schellack ist und das Verhältnis Lösungsmittel zu Bindemittel 3,5 bis 6,9:1 beträgt.

3. Verfahren nach Anspruch 2, dadurch gekennzeichnet, daß das Lösungsmittel Ethanol enthält.

4. Verfahren nach Anspruch 3, dadurch gekennzeichnet, daß das Lösungsmittel ein Gemisch von Ethanol mit Aceton oder Methylenchlorid ist.

5. Verfahren nach Anspruch 1, dadurch gekennzeichnet, daß das Bindemittel Kaffeewachs oder Polystyrol ist und das Lösungsmittel einen halogenierten Kohlenwasserstoff einschließt.

6. Verfahren nach Anspruch 5, dadurch gekennzeichnet, daß das Bindemittel ein Gemisch aus Kaffeewachs und Schellack ist.

7. Verfahren nach einem der vorhergehenden Ansprüche, dadurch gekennzeichnet, daß 1 bis 5 Gew.-Teile Lösung auf jeweils 100 Gew.-Teile Saatgut aufgebracht werden.